# EUROPEAN PATENT SPECIFICATION

(11) **EP 3 129 556 B1**
(45) Date of publication and mention of the grant of the patent: **19.06.2019**
(21) Application number: 15729266.5
(22) Date of filing: 09.04.2015
(51) Int. Cl.: E02B 3/10, E02B 3/12

(54) **SELF-FILLING FLOOD-PROTECTION BAG**
SELBSTAUFFÜLLENDER HOCHWASSERSCHUTZBEUTEL
SAC ANTI-INONDATION À REMPLISSAGE AUTOMATIQUE

(30) Priority: 09.04.2014 SK 500392014; 07.04.2015 SK 212015
(43) Date of publication of application: 15.02.2017
(73) Proprietor: Levice Invest, S.R.O., 831 01 Bratislava (SK)
(72) Inventor: Zúzi, Bohuslav, 902 01 Pezinok (SK); HAJDU, Adam, 821 02 Bratislava (SK)
(74) Representative: Jeck, Anton
(86) International application number: PCT/SK2015/000001
(87) International publication number: WO 2015/156743

(56) References cited:
- EP-A1- 0 368 107
- CN-Y- 2 632 143
- JP-A- S61 169 509
- US-A1- 2006 099 033
- US-A1- 2010 278 591
- US-A1- 2011 297 575

## Description

### Technical field

The invention relates to a construction of self filling flood-protection bag for the purpose of simple, fast and effective flood-protection of buildings, communications, agricultural areas, and which function is to eliminate, respectively diminish damages incurred during floods, emergency water leaks during failures in water supply systems and the like. Invention falls into area of water-resources management.

### Background of the invention

From the state of the art are known solid and transportable flood-protection barriers, which are put together to form flood-protection walls. They are different types of walls anchored to solid or detachable supporting posts and different types of barriers filled with water or other material. Essential flood-protection means are flood-protection bags filled with sand, soil, crushed stone and other bulk material.

Known are also bags (pouches) fillable with water, that have cross-section of triangle that stands on the base, as described in Slovak utility model UV 6300. Keeping the shape of cross-section is possible to secure by the help of carrier bar construction. Bag coat is made of polyethylene. These barriers occupy very large space by storage.

Known are also flexible plastic bags in the shape of pipes, as described in Slovak utility model UV 5855. These are filled with water and their advantage is high ability for adaptation to terrain. Their disadvantage is that they can not be used for higher water column, by flowing through water are not sufficiently stable, and there is a threat of puncture in plastic material caused by sharp material.

Known is also system of open bags, that have trapezoid cross-section and are formed by massive framework from steel pipes and coat made from geotextile respectively coated with plastic material. They are filled with sand, soil, respectively water. Similar construction has also known segment of flood-protection wall, based on bag fillable with water, described in disclosed international patent application WO 02/10519. Their disadvantage consists in their low resistance against tension in the top parts of cross-sections. For their fixation they require erection of supporting structure.

Further is known system of flood-protection barrier based on construction of freely erected posts and cross bedded fillings. Disadvantage of this system consists in that there is necessary anchoring of brace rods for posts with the help of massive framework.

Also known is the system of flood-protection barrier consisting of the system of crossways and firmly into terrain anchored supporting elements with defined spacing. To the line of such tailored crossway supporting elements is extended coat respectively even fixed with bags with sand.

Further is known the system of absorptive modules with block shape with water absorbent, that are interconnected by fixation elements, for example by Velcro fasteners. Disadvantage of this system is the necessity of keeping the cleanliness of fixation elements, so that they could safely fulfil the function of reliable interconnection of modules. There is also not sufficiently secured interconnection of modules and the barrier built in this way is labile.

US-A-2006/0099033 discloses a flood-protection bag according to the preamble of claim 1.

Limited options of flood-protection barriers, that relates to their mobility, which is influenced also by their firm anchoring into concrete as well as into infirm foundations and disadvantages resulting from the limitation of copying the irregularities within terrain and also hard and bad manipulation with sand bags, can cause health issues, requires a big number of working forces and at last also their bad storage ability and costs for transportation of sand, had created space for development of such construction of flood-protection barriers, that would be mobile without firm anchoring elements, easily transportable, mountable, detachable and storable, would be usable for firm, as well as infirm bedrock.

The result of this effort is self filling flood-protection bag further described in the present invention.

### Disclosure of the invention

Above mentioned disadvantages are removed by self filling flood-protection bag according to claim 1.

Terminal yoke in form of letter "T" may contain at least two handling metal or plastic eyelets. Eyelets serve for reinforcement of erected flood-protection wall by pulling the rope through these eyelets, binding those self filling flood-protection bags and potential anchoring of rope. Eyelets serve also for manipulation with those self filling flood-protection bags by their removal. The water superabsorbent (SAP) itself can be in the form of moulded band, grid or in the form of granules or jelly. The mixture of water superabsorbents can be based on cross-linked polyacrylate as polyacrylamide copolymers and polyacrylic acid, starch copolymers, carboxymethyl cellulose, hydroxymethylcellulose, modified cellulose. Into chambers with the mixture of water superabsorbents can be placed also wetting agents and/or polyvinylpyrrolidone, that will assure in the contact with water fast swelling of superabsorbents. Self filling flood-protection bag, i.e. chambers and/or also terminal yoke in the form of letter "T" is made of polyester fabric with high water absorbing capacity within whole module's profile which can restrain leakage of jelly particles, superabsorbent granules, to the surface of self filling flood-protection bags and thus can significantly decrease slipping of filled up self filling flood-protection bags.

Advantages of the construction of self filling flood-protection bags are apparent from its effects, that it manifests on the outside. Effects of present invention consist before all in that the suggested constructional solution has low weight suitable for transport and handling. They can be used immediately. Preparation of self filling flood-protection bags by intervention requires in practice very low costs for work, handling and transport, because even thousands of self filling flood-protection bags can be comfortable and fast transported to the place of intervention. Storage of big amount of self filling flood-protection bags is very simple and long-term, more than 5 years. Their application is very simple, because deflated self filling flood-protection bags poured into water within 5 to 7 minutes expand to full volume as a result of taken up water. Self filling flood-protection bags can be used repeatedly and are environmentally acceptable. Considered is in particular the usage of these self filling flood-protection bags according to the present invention for:
- Protection of residential, administrative and industrial objects;
- Removal of contaminated waters;
- Protection of swimming pools and bathing pools against penetrations of flood water;
- Protection of channels and drain areas;
- Absorption of flood and rainfall water from excavations;
- Protection of building grounds, roads and buildings against waters;
- Protection and drainage of underground garages and basements;
Deflection and regulation of water flow.

### Brief description of drawings

Self filling flood-protection bag according to the invention will be further explained on particular embodiments shown on drawings, where Fig. 1 shows three-dimensional view on one deflated self filling flood-protection bag with two chambers and there is also shown view in its cross-section A-A. Fig. 2 shows detail B in cross-section of self filling flood-protection bag. Fig. 3 shows constructed flood-protection wall consisting of self filling flood-protection bags stacked on each other.

### Exemplary embodiments

It is understood that particular embodiments of self filling flood-protection bags according to the invention are shown for illustrative purposes only and not as limiting technical solutions.

To the experts in the art can not make any difficulties dimensioning of such self filling flood-protection bags and suitable choice of materials and structural arrangements, thus these characteristics were not solved in details.

### Example 1

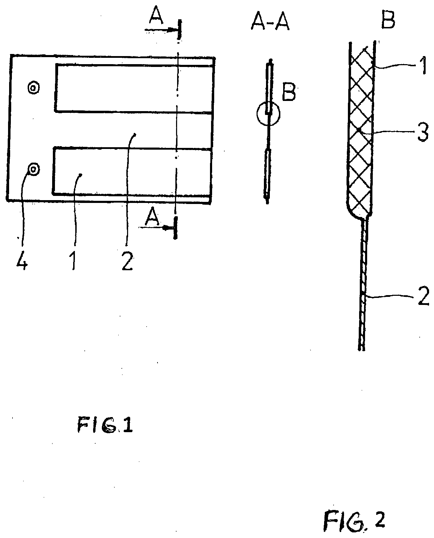

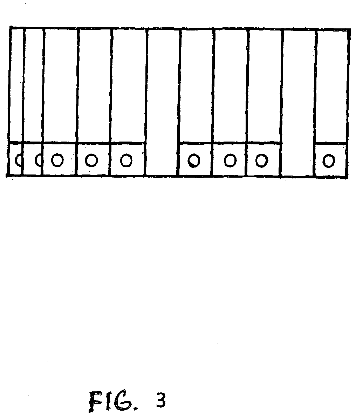

In this example of particular embodiment of the subject of invention is described first arrangement of self filling flood-protection bag, as those shown on Fig. 1 and 2. This self filling flood-protection bag consists of two enclosed chambers 1, that are interconnected by terminal yoke 2 in form of letter "T" and that are made of polyester fabric with high water absorbing capacity. Chambers 1 are filled up with granular or jelly mixture of water superabsorbents 3 based on cross-linked polyacrylates: polyacrylamide copolymers and polyacrylic acid together with polyvinylpyrrolidone. Terminal yoke 2 in form of letter "T" contains two handling metal eyelets 4. On Fig. 3 is shown built-up flood-protection wall, it consists of self filling flood-protection bags stacked on each other, where can be seen innovative function of terminal yokes 2, that provide stability, but also watertightness of stacked self filling flood-protection bags, because terminal yokes 2 from one row are pushed by chambers 1 of lower and higher row of stacked self filling flood-protection bags.

### Example 2

In this example of particular embodiment of the subject of invention is described second arrangement of self filling flood-protection bag. This self filling flood-protection bag is sufficiently described in foregoing example. Difference consists only in the form of absorbent. In this case chambers 1 are filled up with moulded water superabsorbent 3 in the shape of latticed band. Next difference consists in that the terminal yoke 2 is made of plastic.

### Example 3

In this example of particular embodiment of the subject of invention is described third arrangement of self filling flood-protection bag. This self filling flood-protection bag is sufficiently described in foregoing example. Difference consists only in the number of three chambers 1 interconnected by two terminal yokes 2 of self filling flood-protection bag. Terminal yoke 2 in form of letter "T" than contains three handling metal eyelets 4.

### Industrial applicability

Self filling flood-protection bag according to the inventions finds application in the area of water-supply management for the construction of flood-protection dams and barriers and building industry for drying of sloppy and wet spaces.

## Claims

1. Self-filling flood-protection bag consisting of at least two enclosed chambers (1), that are interconnected, where at least the chambers (1) are from polyester fabric with high water absorbing capacity, wherein the chambers (1) are at least partially filled up with a mixture of water superabsorbent (3), **characterised in that** the chambers (1) are interconnected by a terminal yoke (2) in the form of a letter "T".

2. Self-filling flood-protection bag according to patent claim 1 , **characterized in that** the terminal yoke (2) in form of letter "T" is polyester fabric with high water absorbing capacity and contains at least two handling eyelets (4).

3. Self-filling flood-protection bag according to patent claim 1, **characterized in that** the terminal yoke (2) in form of letter "T" is made of plastic and contains at least two handling eyelets (4).

4. Self-filling flood-protection bag according to patent claim 1, **characterized in that** the water superabsorbent (3) is in form of a molded band or in the form of granules or in the form of jelly.

5. Self-filling flood-protection bag according to patent claim 1, **characterized in that** the water superabsorbent (3) is based on cross-linked polyacrylate.

6. Self-filling flood-protection bag according to at least one of patent claims 1 to 7, **characterized in that** into chambers (1) are placed wetting agents and/or polyvinylpyrrolidone.

7. Self-filling flood-protection bag according to patent claim 1, **characterized in that** the water superabsorbent (3) is in the form of a jelly.

8. Self-filling flood-protection bag according to patent claim 1, **characterized in that**
- into chambers (1) are placed wetting agents and
- the water superabsorbent (3) is in the form of a jelly.

## Patentansprüche

1. Selbstfüllender Hochwasserschutzbeutel, bestehend aus mindestens zwei geschlossenen Kammern (1), die miteinander verbunden sind, wobei mindestens die Kammern (1) aus Polyestergewebe mit hohem Wasseraufnahmevermögen bestehen, wobei die Kammern (1) mindestens teilweise mit einer Mischung aus Wasser-Superabsorptionsmittel (3) gefüllt sind, **dadurch gekennzeichnet,**
**dass** die Kammern (1) durch ein Anschlussjoch (2) in Form eines Buchstabens "T" miteinander verbunden sind.

2. Selbstfüllender Hochwasserschutzbeutel nach Anspruch 1,
**dadurch gekennzeichnet,**
**dass** das Anschlussjoch (2) in Form des Buchstabens "T" ein Polyestergewebe mit hohem Wasseraufnahmevermögen ist und mindestens zwei Handhabungsösen (4) enthält.

3. Selbstfüllender Hochwasserschutzbeutel nach Anspruch 1,
**dadurch gekennzeichnet,**
**dass** das Anschlussjoch (2) in Form des Buchstabens "T" aus Kunststoff besteht und mindestens zwei Handhabungsösen (4) enthält.

4. Selbstfüllender Hochwasserschutzbeutel nach Anspruch 1,
**dadurch gekennzeichnet,**
**dass** das Wasser-Superabsorptionsmittel (3) in Form eines geformten Bandes oder in Form von Granulat oder in Form von Gelee vorliegt.

5. Selbstfüllender Hochwasserschutzbeutel nach Anspruch 1,
**dadurch gekennzeichnet,**
**dass** das Wasser-Superabsorptionsmittel (3) auf vernetztem Polyacrylat beruht.

6. Selbstfüllender Hochwasserschutzbeutel nach einem der Ansprüche 1 bis 7,
**dadurch gekennzeichnet,**
**dass** in die Kammern (1) Benetzungsmittel und/oder Polyvinylpyrrolidon eingebracht sind.

7. Selbstauffüllender Hochwasserschutzbeutel nach Anspruch 1,
**dadurch gekennzeichnet,**
**dass** das Wasser-Superabsorptionsmittel (3) in Form eines Gelees vorliegt.

8. Selbstfüllender Hochwasserschutzbeutel nach Anspruch 1,
**dadurch gekennzeichnet,**
**dass**
- in die Kammern (1) Benetzungsmittel eingebracht sind und
- das Wasser-Superabsorptionsmittel (3) in Form eines Gelees vorliegt.

## Revendications

1. Sac anti-inondation à remplissage automatique comprenant au moins deux chambres fermées (1) qui sont raccordées entre elles, dans lequel au moins les chambres (1) sont en tissu de polyester à haut pouvoir d'absorption de l'eau, les chambres (1) étant au moins partiellement remplies d'un mélange de superabsorbant d'eau (3), **caractérisé en ce que** les chambres (1) sont raccordées entre elles par une fourche terminale (2) en forme de lettre « T ».

2. Sac anti-inondation à remplissage automatique selon la revendication 1, **caractérisé en ce que** la fourche terminale (2) en forme de lettre « T » est en tissu de polyester à haut pouvoir d'absorption de l'eau et contient au moins deux oeillets de manutention (4).

3. Sac anti-inondation à remplissage automatique selon la revendication 1, **caractérisé en ce que** la fourche terminale (2) en forme de lettre « T » est en matière plastique et contient au moins deux oeillets de manutention (4).

4. Sac anti-inondation à remplissage automatique selon la revendication 1, **caractérisé en ce que** le superabsorbant d'eau (3) se présente sous la forme d'une bande moulée ou sous la forme de granulés ou sous la forme d'une gelée.

5. Sac anti-inondation à remplissage automatique selon la revendication 1, **caractérisé en ce que** le superabsorbant d'eau (3) est à base de polyacrylate réticulé.

6. Sac anti-inondation à remplissage automatique selon au moins l'une des revendications 1 à 7, **caractérisé en ce que** dans les chambres (1) sont placés des agents mouillants et/ou de la polyvinylpyrrolidone.

7. Sac anti-inondation à remplissage automatique selon la revendication 1, **caractérisé en ce que** le superabsorbant d'eau (3) se présente sous la forme d'une gelée.

8. Sac anti-inondation à remplissage automatique selon la revendication 1, **caractérisé en ce que**
- dans les chambres (1) sont placés des agents mouillants et
- le superabsorbant d'eau (3) se présente sous la forme d'une gelée.
